# EUROPÄISCHE PATENTANMELDUNG

(11) **EP 1 209 402 A1**
(43) Veröffentlichungstag der Anmeldung: **29.05.2002**
(21) Anmeldenummer: 01124837.4
(22) Anmeldetag: 18.10.2001
(51) Int. Cl.: F16L 21/02, F16L 21/00, F16L 47/06

(54) **Rohrkupplung zur Verbindung zweier Rohre**

(30) Priorität: 23.11.2000 AT 19692000
(71) Anmelder: Dätwyler AG Schweizerische Kabel-, Gummi- und Kunststoffwerke, 6467 Schattdorf (CH)
(72) Erfinder: Imhof, Peter, 6462 Seedorf (CH); Sonderegger, Hans, 6460 Altdorf (CH); Dahm, Jürgen, 6467 Schattdorf (CH)
(74) Vertreter: Hefel, Herbert, Dipl.-Ing.

(57) **Zusammenfassung**

Eine Rohrkupplung zur Verbindung zweier Rohre zur Führung von Abwasser, Trinkwasser oder anderen Medien, insbesondere Rohre aus glasfaserverstärktem Kunststoff umfaßt eine aus glasfaserverstärktem Polyester bestehende, rohrstückförmige Muffe (1) und eine mit der inneren Oberfläche der Muffe verbundene umfangsgeschlossene Dichtung (2) aus einem gummielastischen Material, beispielsweise EPDM, zum Einschieben und Abdichten der Rohrenden (6) der beiden zu verbindenden Rohre. Zwischen dem gummielastischen Material der Dichtung (2) und der aus glasfaserverstärktem Polyester gebildeten Muffe (1) eine aus einem Vlies (8) bestehende Schicht angeordnet, welche sowohl mit dem gummielastischen Material der Dichtung (2) als auch mit dem glasfaserverstärkten Polyester der Muffe (11) materialschlüssig verbunden ist.

## Beschreibung

Die Erfindung betrifft eine Rohrkupplung sowie ein Verfahren zur Herstellung einer Rohrkupplung zur Verbindung zweier Rohre zur Führung von Abwasser, Trinkwasser oder anderen Medien, insbesondere Rohre aus glasfaserverstärktem Kunststoff, welche eine aus glasfaserverstärktem Polyester bestehende, rohrstückförmige Muffe und eine mit der inneren Oberfläche der Muffe verbundene umfangsgeschlossene Dichtung aus einem gummielastischen Material, beispielsweise EPDM, zum Einschieben und Abdichten der Rohrenden der beiden zu verbindenden Rohre umfaßt.

Derartige Rohrkupplungen sind bekannt, beispielsweise aus der DE 2744 739 A1. Diese Schrift beschreibt den grundsätzlichen Aufbau einer solchen Rohrkupplung und ihre Verwendung, worauf hier Bezug genommen wird. Bei dieser bekannten Rohrkupplung sind die Muffe und die Dichtung mechanisch über korrespondierende Vor- und Rücksprünge im Bereich der Innenseite der Muffe und der Außenseite der Dichtung verankert. Dies führt zu einem entsprechend aufwendigen Herstellungsprozeß. Zur Auffüllung der Bereiche zwischen den Vorsprüngen in der Dichtung werden beim Aufbau der Muffe um die Dichtung herum zunächst einzelne Glasfaserfäden sowie Polyesterausgangsstoff auf die Dichtung aufgebracht. Erst nach Auffüllung der Hohlräume zwischen den Vorsprüngen kann eine mit Polyesterausgangsstoff getränkte Glasfasermatte um die Dichtung gewickelt werden, wobei die Dichtung auf einer sich drehenden Trommel angeordnet ist.

Weiters kann trotz der vielen mechanischen Verankerungselemente das Sich-Lösen der Dichtung nicht zuverlässig verhindert werden, so daß es beim achsialen Einschieben korrespondierender Rohrenden immer wieder zu einer Ablösung der Dichtung kommt. Klebstoffe oder Haftvermittler sind aber derzeit keine bekannt, die eine sichere und dauerhafte Verbindung dieser derart unterschiedlichen Werkstoffe ermöglichen.

In der DE 199 25 817 C1, welche eine weitere Rohrkupplung der eingangs genannten Art zeigt, wurde eine materialschlüssige Verbindung von korrespondierenden Flächenabschnitten der Dichtung und der Muffe mittels einer chemischen Vernetzung vorgeschlagen. Hierzu wird die Dichtung auf ihrer Außenfläche bis zum Aufbrechen von Kohlenstoffketten des Dichtungsmaterials thermisch erwärmt und danach ein Haftvermittler oder eine Mischung aus dem Haftvermittler und dem Material der Muffe auf die Außenfläche der Dichtung aufgetragen. Allerdings wird auch bei dieser aus der DE 199 25 817 C1 bekannten Rohrkupplung keine ausreichend sichere Verbindung zwischen der Dichtung und der Muffe erreicht. In der Praxis wird daher bei Rohrkupplungen dieser Art dennoch zumindest zusätzlich eine mechanische Verankerung der in der DE 2744 739 A1 gezeigten Art vorgesehen.

Aufgabe der Erfindung ist es, eine Rohrkupplung der eingangs genannten Art bereitzustellen, die einfach und kostengünstig herstellbar ist und bei der eine sichere und dauerhafte Verbindung zwischen der Muffe und der Dichtung gegeben ist. Erfindungsgemäß gelingt dies dadurch, daß zwischen dem gummielastischen Material der Dichtung und der aus glasfaserverstärktem Polyester gebildeten Muffe eine aus einem Vlies bestehende Schicht angeordnet ist, welche sowohl mit dem gummielastischen Material der Dichtung als auch mit dem glasfaserverstärkten Polyester der Muffe materialschlüssig verbunden ist.

Ein erfindungsgemäßes Verfahren ist dadurch gekennzeichnet, daß bei der Herstellung der Dichtung ein Vlies mit niedrigviskosem Material der Dichtung in Kontakt gebracht wird und in der Folge die Aushärtung bzw. Vernetzung des Materials der Dichtung erfolgt und daß in einem weiteren Schritt des Verfahrens bei der Herstellung der Muffe glasfaserverstärktes, unvernetztes Ausgangsmaterial von Polyester auf die an der Außenfläche der Dichtung vorliegende Vliesschicht aufgebracht wird und in der Folge unter Ausbildung einer materialschlüssigen Verbindung zwischen dem Vlies und der aus glasfaserverstärktem Polyester gebildeten Muffe die Vernetzung des Ausgangsmaterials des Polyesters erfolgt.

Durch die erfindungsgemäße Zwischenschaltung einer Vliesschicht, die materialschlüssig sowohl mit der Dichtung als auch mit der Muffe verbunden ist, wird eine äußerst stabile und sichere Verbindung zwischen der aus dem gummielastischen Material der Dichtung und der aus Glasfaser verstärktem Polyester bestehenden Muffe erreicht, welche insbesondere die Gefahr der Ablösung der Dichtung bei der Montage der Kupplung verringert. Dabei kann eine erfindungsgemäße Rohrkupplung auch ohne Beeinflussung der Trinkwassertauglichkeit ausgebildet werden. Das erfindungsgemäße Verfahren zeichnet sich zudem durch einen einfachen und kostengünstigen Herstellungsprozeß der Rohrkupplung aus. Besonders bevorzugt ist es, daß die Dichtung bandförmig extrudiert wird, wobei das Vlies beim Extrusionsvorgang auf das Material der Dichtung aufgebracht wird. In der Folge kann nach dem Aushärtungs- bzw. Vernetzungsprozeß des Materials der Dichtung die bandförmig extrudierte Dichtung auf die gewünschte Länge abgelängt werden und die beiden Enden zur Ausbildung einer umfangsgeschlossenen Dichtung zusammengeführt und miteinander verbunden, vorzugsweise zusammenvulkanisiert werden.

Aus der EP 0 445 381 A2 ist eine wärmeschrumpfbare Umhüllung zum Umhüllen von Gegenständen, beispielsweise Kabeln, Spleißen oder dergleichen bekannt. Nachdem die Umhüllung um den zu schützenden Gegenstand gelegt wurde und ihre Enden miteinander verbunden wurden, wird die Schrumpfung durch Wärmeeinwirkung durchgeführt. Diese Umhüllung weist zwischen einer Flächenfolie und einer Deckfolie ein Fasermaterial als Verstärkungskomponente auf, das beispielsweise beim Extrudieren der Umhüllung zwischen die Flächenfolie und die Deckfolie einbebracht wird.

Die Verstärkungskomponente aus dem Fasermaterial dient hierbei zur Verstärkung der Umhüllung gegenüber einem Durchreißen der Umhüllung als Ganzes (das heißt durch alle ihre Schichten) bei auf die Umhüllung einwirkenden Zugbeanspruchungen. Es geht bei dieser Einrichtung dagegen nicht darum, durch die Verstärkungskomponente eine Verbesserung der Verbindung zwischen den einzelnen Folienkomponenten zu erreichen. Ein Fasermaterial in ungeordneten Konfigurationen wird bei der Folie der EP 0 445 381 A2 aus dem Grund eingesetzt, daß die Schrumpfbarkeit der Folie nicht beeinträchtigt werden soll und weiters um Einrissen in allen Längsrichtungen der Folie entgegenzuwirken.

Außerdem handelt es sich bei der Umhüllung der EP 0 445 381 A2 im Gegensatz zum Erfindungsgegenstand um ein insgesamt dünnwandiges, flexibles Laminat, wobei als Materialien der einzelnen Folien Polyethylen, Polyolefine oder Polypropylen genannt werden.

Weitere Vorteile und Einzelheiten der Erfindung werden im folgenden anhand der beiliegenden Zeichnung erläutert. In dieser zeigen:
- Fig. 1: einen Schnitt durch den Mantel einer herkömmlicherweise verwendeten Rohrkupplung gemäß dem Stand der Technik (die zu verbindenden Rohrenden sind in der in die Rohrkupplung eingeschobenen Position ebenfalls dargestellt;
- Fig. 2 und Fig. 3: erste und zweite Ausführungsvarianten der Erfindung in einem Fig. 1 entsprechenden Schnitt;
- Fig. 4: eine schematische Darstellung von Arbeitsstationen zur Herstellung der Dichtung mit dem materialschlüssig verbundenen Vlies;
- Fig. 5: eine schematische Darstellung des Extrusionskopfes.

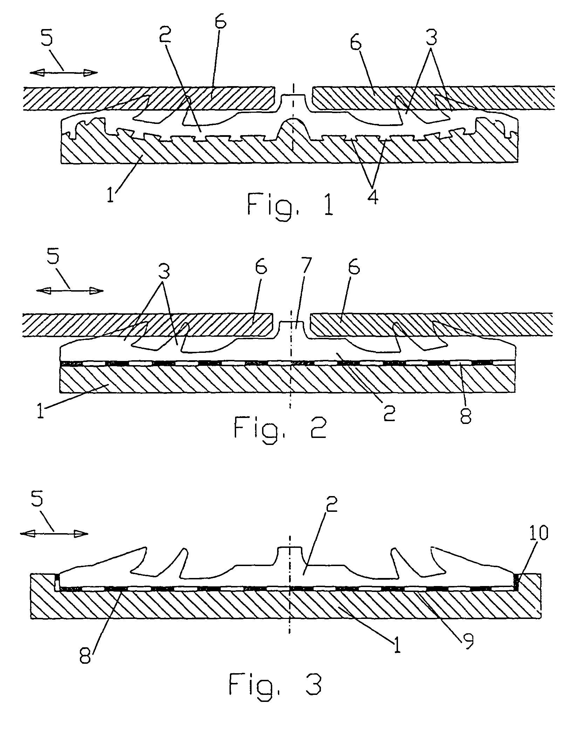

Die in Fig. 1 als Längsschnitt durch den Mantel dargestellte herkömmliche Rohrkupplung umfaßt eine aus Glasfaser verstärktem Polyester gebildete rohrstückförmige Muffe 1 und eine die Muffe 1 innenseitig bedeckende, umfangsgeschlossene Dichtung 2 aus einem gummielastischen Material. Die Dichtung weist an beiden achsialen Enden jeweils zwei gegenüber der Muffe nach innen vorkragende Dichtungslippen 3 auf. An der der Muffe zugewandten Oberfläche der Dichtung sind eine Reihe von Vorsprüngen 4 vorgesehen, die in entsprechende Vertiefungen in der Muffe eingreifen und diese Vertiefungen zur Herstellung einer formschlüssigen Verbindung zwischen der Dichtung 2 und der Muffe 1 hintergreifen. Es sind weiters zwei in achsialer Richtung 5 der Muffe in die Rohrkupplung eingeschobene zu verbindende Rohrenden 6 dargestellt (die Dichtungslippen 3 sind dabei allerdings in der entspannten Stellung ohne eingeschobene Rohrenden dargestellt - im eingeschobenen Zustand der Rohrenden würden diese Dichtungslippen 3 gegenüber der in Fig. 1 dargestellten Stellung in Richtung der Muffe 1 verformt und mit einer elastischen Vorspannung an den Außenseiten der Rohrenden 6 anliegen und diese ringförmig umgeben).

Bei der in Fig. 2 dargestellten Ausführungsvariante einer erfindungsgemäßen Rohrkupplung ist die Dichtung 2 auf ihrer innenliegenden, von der Muffe 1 abgewandten Seite wie bei der herkömmlichen Rohrkupplung ausgebildet. Es sind an jedem achsialen Ende der Dichtung eine oder mehrere nach innen vorstehende Dichtungslippen 3, hier zwei, vorgesehen, und im mittleren Bereich der Dichtung ist in einem Bereich der Dichtung mit einer größeren Materialstärke ein radial nach innen vorstehender Dichtungszapfen 7 aussgebildet zur Anlage der Stirnseiten der beiden Rohrenden 6. Die Muffe besteht wiederum aus glasfaserverstärktem Polyester. Die zu verbindenden Rohre können Abwasserrohre, Trinkwasserrohre oder Rohre zur Führung von anderen Medien sein.

Zwischen der Dichtung 2 und der Muffe 1 ist eine aus einem Vlies 8 bestehende Schicht angeordnet. Das Vlies 8 ist dabei sowohl mit dem gummielastischen Material der Dichtung 2 als auch mit dem glasfaserverstärkten Polyester der Muffe 1 materialschlüssig verbunden.

Der Unterschied der in Fig. 3 dargestellten Ausführungsvariante der Erfindung zu der in Fig. 2 dargestellten besteht darin, daß in der Muffe 1 eine Vertiefung 9 bzw. ein Rücksprung vorgesehen ist, in dem die Dichtung angeordnet ist. Die aus dem Vlies 8 bestehende Schicht ist hierbei zumindest im Bereich der Bodenfläche der Vertiefung 9 vorgesehen. Diese Schicht ist bevorzugterweise durchgehend ausgebildet, könnte aber auch unterbrochen sein, so daß in Teilbereichen kein Vlies zwischen der Muffe und der Dichtung vorliegt. Bei dem in Fig. 3 dargestellten Ausführungsbeispiel erstreckt sich die Schicht aus dem Vlies 8 auch über die Seitenflächen 10 der Vertiefung 9. Im Bereich dieser Seitenflächen 10 kann die Vliesschicht auch entfallen. Durch die Anordnung der Dichtung 2 in der Vertiefung 9 wird eine zusätzliche Sicherheit gegenüber einer achsialen Verschiebung der Dichtung 2 erreicht. Dies kann insbesondere beim Einsatz der Rohrkupplung zur Verbindung von Druckrohren, beispielsweise auch Trinkwasserrohren, in denen z.B. ein Druck bis zu 25 bar herrschen kann, vorteilhaft sein, um einem Herausdrücken der Dichtung 2 in Fließrichtung des Wassers aus der Muffe 1 zusätzlich entgegenzuwirken. Denkbar und möglich wäre es auch, die Bodenfläche zur weiteren mechanischen Abstützung der Dichtung strukturiert zu gestalten.

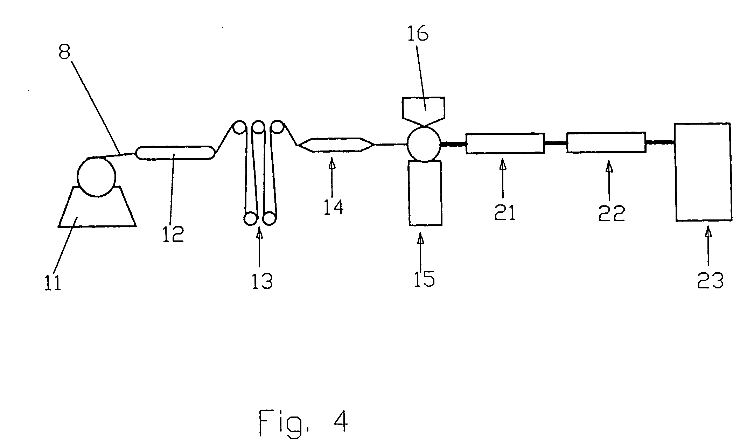

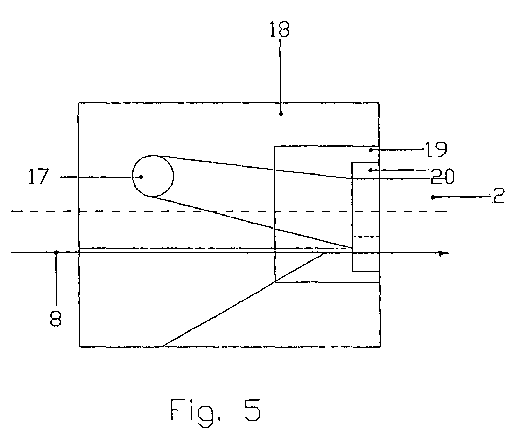

Der Arbeitsablauf bei der Herstellung der Dichtung mit dem materialschlüssig mit dieser verbundenen Vlies wird im folgenden anhand der Fig. 4 und 5 erläutert. Das Vlies 8 ist zu Rollenware konfektioniert und wird von einer Abwickeleinrichtung 11 von der Rolle abgewickelt. In einer Einheit 12 kann zum Zusammenfügen eines Rollenendes mit dem Beginn einer neuen Rolle ein Gehrungsschnitt und eine Verklebung der beiden aneinander anliegenden Enden durchgeführt werden. Die vom Vlies gebildete Bahn wird weiters durch eine Speichereinrichtung 13 (durch die eine Ersetzung einer aufgebrauchten Vliesrolle ohne Unterbrechung des Herstellungsprozesses ermöglicht wird) geführt und in einer Ausrichteinheit 14 in Querrichtung zur Bahn ausgerichtet.

Das Ausgangsmaterial der Dichtung befindet sich in einem Vorratsbehälter 16 eines Extruders 15. Der Extruderkopf 18 ist in Fig. 5 schematisch dargestellt. Durch die Anschlußöffnung 17 erfolgt die Zufuhr des Ausgangsmaterials der Dichtung. Als Dichtungswerkstoff ist EPDM (Ethylen-Propylen-Dien/Terpolymer) bevorzugt. Es könnten auch andere gummielastische Materialienverwendet werden, beispielsweise SBR (Styrol-Butadien-Kautschuk), NR (Naturkautschuk), IIR (Isobutylen - Isopren - Kautschuk), NBR (Acryl - Nitril - Butadien - Kautschuk, HNBR (hydrieter Acryl - Nitril - Butadien - Kautschuk), FPM (Fluor Elastomere) sowie thermoplastische Elastomere TPR und Thermoplaste TP. Diese Elastomer-Werkstoffe können den internationalen Standards wie EN 681.1, Usf-477, Japan K 6353, ISO 4633 entsprechen. Als Elastomer-Werkstoffe können auch Verschnitte der einzelnen Elastomere eingesetzt werden.

Die vom Matrizenhalter 19 gehaltene Matrize 20 weist das herzustellende Profil der Dichtung 2 auf. Beim Extrudieren der Dichtung - zunächst in flacher Form - wird die Bahn aus dem Vlies 8 mit dem Material der Dichtung zusammengeführt und an dieses angepreßt (beispielsweise mittels einer Rolle). Das Material der Dichtung ist zu diesem Zeitpunkt niedrigviskos. Bei der Verwendung von EPDM oder anderen Elastomer-Ausgangsmaterialien ist der Werkstoff dabei unvernetzt bzw. unvulkanisiert. Thermoplaste oder thermoplastische Elastomere werden dagegen durch Erwärmung in diesen niedrigviskos-plastischen Zustand überführt. Das niedrigviskose Dichtungsmaterial dringt dabei in den äußeren Bereich des Vlieses ein und zieht dieses mit und wird in der Folge durch eine Aushärt- bzw. Vernetzungsstrecke 21 geführt. Bei Thermoplasten und thermoplastischen Elastomeren erfolgt die Aushärtung durch Abkühlung. Bei Elastomer-Ausgangsmaterialien wird die Vernetzung durch Erwärmung beschleunigt. Beispielsweise zunächst in einem UHF-Kanal, in dem eine erste, rasche Erwärmung erfolgt, die den Beginn der Vulkanisation bzw. Vernetzung einleitet. An diesen kann ein Warmluftkanal anschließen, in dem die Temperatur gehalten wird, um die vollständige Vernetzung zu erreichen und zu optimieren. Bei der Aushärtung bzw. Vernetzung des Materials der Dichtung erfolgt die materialschlüssige Verbindung zwischen der Dichtung und dem Vlies.

Anschließend (im Falle der Verwendung von Elastomeren) wird die Dichtung mit der materialschlüssig mit dieser verbundenen Vliesschicht durch eine Kühlstrecke 22 geführt und von einer Aufwickeleinheit 23 zu einer Rollenware gewickelt.

Von dieser Rollenware der Dichtung mit der Vliesschicht werden Stücke entsprechender Länge abgelängt und an ihren beiden Enden zur Ausbildung der umfangsgeschlossenen Dichtung miteinander verbunden, vorzugsweise durch chemische Vernetzung bzw. Vulkanisation.

Die umfangsgeschlossenen Dichtungen mit der außen liegenden Vliesschicht werden in einem weiteren Arbeitsschritt auf eine Trommel übergestellt. Auf dieser erfolgt der Aufbau der rohrstückförmigen Muffe um die Dichtung herum. Es wird dazu eine mit Polyesterausgangsstoff getränkte Glasfasermatte um die sich drehende Trommel und auf die Vliesschicht der darauf angeordneten, vorgewärmten Dichtung aufgewickelt. Während des Aufbringens der getränkten Matte auf die Trommel wird zusätzlich in herkömmlicher Weise Polyesterausgangsstoff auf die, auf die Trommel aufgebrachte Matte aufgetropft. Wenn die gewünschte Dicke der Muffe erreicht ist, wird die zugeführte Matte abgeschnitten und die Trommel weitergedreht. Zur Beschleunigung der (exotherm stattfindenden) Reaktion wird günstigerweise eine Infrarotbestrahlung durchgeführt, wie dies ebenfalls bereits bekannt ist. Bei der Vernetzung des Polyesters, welches in die äußeren Schichten des Vlieses eingedrungen ist, erfolgt eine materialschlüssige Verbindung zwischen der Muffe und dem Vlies. Insgesamt wird somit eine sehr starke und sichere Verbindung zwischen der Dichtung und der Muffe erzielt.

Als Vlies ist die Verwendung eines Polyestervlieses bevorzugt. Ein solches kann sowohl die materialschlüssige Verbindung mit dem gummielastischen Material der Dichtung als auch mit dem Polyester der Muffe eingehen und ist weiters thermisch ausreichend stabil, wobei bei der Herstellung der Rohrkupplung keine den Herstellungsprozeß störenden Schrumpfungsprozesse auftreten. Es werden daher bevorzugterweise sogenannte thermisch verfestigte Polyestervliese verwendet, welche glatt kalandriert sind. Das Quadratmetergewicht liegt dabei im Bereich zwischen 20 und 200 g, vorzugsweise im Bereich zwischen 60 und 100 g.

Grundsätzlich denkbar und möglich wäre auch die Verwendung anderer Vliese mit den gewünschten Eigenschaften, eventuell könnten z.B. auch Baumwollvliese verwendet werden.

Der beispielsweise verwendete EPDM-Werkstoff ist nach den entsprechenden länderspezifischen Richtlinien für den Einsatz im Trinkwasserbereich geeignet.

Die Ausbildung einer Muffe aus glasfaserverstärktem Polyesterharz (mit verschiedenen Zusätzen und Zuschlägen) ist hinlänglich bekannt.

### Legende zu den Hinweisziffern:

- 1: Muffe
- 2: Dichtung
- 3: Dichtungslippe
- 4: Vorsprung
- 5: achsiale Richtung
- 6: Rohrende
- 7: Dichtungszapfen
- 8: Vlies
- 9: Vertiefung
- 10: Seitenfläche
- 11: Abwickeleinrichtung
- 12: Einheit
- 13: Speichereinrichtung
- 14: Ausrichteinheit
- 15: Extruder
- 16: Vorratsbehälter
- 17: Anschlußöffnung
- 18: Extruderkopf
- 19: Matrizenhalter
- 20: Matrize
- 21: Vernetzungsstricke
- 22: Kühlstrecke
- 23: Aufwickeleinheit

## Patentansprüche

1. Rohrkupplung zur Verbindung zweier Rohre zur Führung von Abwasser, Trinkwasser oder anderen Medien, insbesondere Rohre aus glasfaserverstärktem Kunststoff, welche eine aus glasfaserverstärktem Polyester bestehende, rohrstückförmige Muffe und eine mit der inneren Oberfläche der Muffe verbundene umfangsgeschlossene Dichtung aus einem gummielastischen Material, beispielsweise EPDM, zum Einschieben und Abdichten der Rohrenden der beiden zu verbindenden Rohre umfaßt, **dadurch gekennzeichnet, daß** zwischen dem gummielastischen Material der Dichtung (2) und der aus glasfaserverstärktem Polyester gebildeten Muffe (1) eine aus einem Vlies (8) bestehende Schicht angeordnet ist, welche sowohl mit dem gummielastischen Material der Dichtung (2) als auch mit dem glasfaserverstärkten Polyester der Muffe (19) materialschlüssig verbunden ist.

2. Rohrkupplung nach Anspruch 1, **dadurch gekennzeichnet, daß** das Vlies (8) ein Polyestervlies ist.

3. Rohrkupplung nach Anspruch 1 oder Anspruch 2, **dadurch gekennzeichnet, daß** das Vlies (8) glatt kalandriert ist.

4. Rohrkupplung nach einem der Ansprüche 1 bis 3, **dadurch gekennzeichnet, daß** das Quadratmetergewicht des Vlieses im Bereich zwischen 20 und 200 g, vorzugsweise zwischen 60 und 100 g liegt.

5. Verfahren zur Herstellung einer Rohrkupplung zur Verbindung zweier Rohre, zur Führung von Abwasser, Trinkwasser oder anderen Medien, insbesondere Rohre aus glasfaserverstärktem Kunststoff, welche eine aus glasfaserverstärktem Polyester bestehende, rohrstückförmige Muffe und eine mit der inneren Oberfläche der Muffe verbundene umfangsgeschlossene Dichtung aus einem gummielastischen Material, beispielsweise EPDM, zum Einschieben und Abdichten der Rohrenden der beiden zu verbindenden Rohre umfaßt,**dadurch gekennzeichnet, daß** bei der Herstellung der Dichtung (2) ein Vlies (8) mit niedrigviskosem Material der Dichtung in Kontakt gebracht wird und in der Folge die Aushärtung bzw. Vernetzung des Materials der Dichtung (2) erfolgt und daß in einem weiteren Schritt des Verfahrens bei der Herstellung der Muffe (1) glasfaserverstärktes, unvernetztes Ausgangsmaterial von Polyester auf die an der Außenfläche der Dichtung vorliegende Vliesschicht aufgebracht wird und in der Folge unter Ausbildung einer materialschlüssigen Verbindung zwischen dem Vlies (8) und der aus glasfaserverstärktem Polyester gebildeten Muffe (1) die Vernetzung des Ausgangsmaterials des Polyesters erfolgt.

6. Verfahren nach Anspruch 5, **dadurch gekennzeichnet, daß** die Dichtung bandförmig extrudiert wird, wobei das Vlies (8) beim Extrusionsvorgang mit dem unvernetzten Material der Dichtung zusammengeführt wird.

7. Verfahren nach Anspruch 6, **dadurch gekennzeichnet, daß** das Vlies beim oder nach dem Zusammenführen mit dem unvernetzten Material der Dichtung an dieses angepreßt wird.

8. Verfahren nach Anspruch 6 oder Anspruch 7, **dadurch gekennzeichnet, daß** die bandförmig extrudierte Dichtung auf die gewünschte Länge abgelängt wird und die beiden Enden zur Ausbildung der umfangsgeschlossenen Dichtung (2) zusammengeführt und miteinander verbunden, vorzugsweise zusammenvulkanisiert werden.

9. Verfahren nach Anspruch 8, **dadurch gekennzeichnet, daß** die umfangsgeschlossene Dichtung auf eine Trommel übergestellt wird und um die an der Außenfläche der Dichtung angeordnete Vliesschicht eine mit unvernetztem Ausgangsmaterial von Polyester getränkte Glasfasermatte gewickelt wird.
